# EUROPÄISCHE PATENTSCHRIFT

(11) **EP 4 396 055 B1**
(45) Veröffentlichungstag und Bekanntmachung des Hinweises auf die Patenterteilung: **20.08.2025**
(21) Anmeldenummer: 22733097.4
(22) Anmeldetag: 14.06.2022
(51) Int. Cl.: B60W 30/18, B60K 31/00, B60W 30/14, B60W 40/072, B60W 40/114, B60W 40/112, B60W 50/14

(54) **VERFAHREN UND VORRICHTUNG ZUR FAHRERINFORMATION BEI EINEM AKTIVIERTEN ABSTANDS- UND/ODER GESCHWINDIGKEITSREGELUNGSSYSTEM**
METHOD AND DEVICE FOR INFORMING A DRIVER UPON ACTIVATING A DISTANCE AND/OR SPEED REGULATING SYSTEM
PROCÉDÉ ET DISPOSITIF POUR INFORMER UN CONDUCTEUR LORS DE L'ACTIVATION D'UN SYSTÈME DE RÉGULATION DE DISTANCE ET/OU DE VITESSE

(30) Priorität: 31.08.2021 DE 102021209512
(43) Veröffentlichungstag der Anmeldung: 10.07.2024
(73) Patentinhaber: Robert Bosch GmbH, 70442 Stuttgart (DE)
(72) Erfinder: HELLMANN, Felix, 71691 Freiberg A.N. (DE); SCHOENHERR, Michael, 71272 Renningen-Malmsheim (DE)
(86) Internationale Anmeldenummer: PCT/EP2022/066152
(87) Internationale Veröffentlichungsnummer: WO 2023/030713

(56) Entgegenhaltungen:
- DE-A1- 102006 002 744
- DE-A1- 102010 027 768
- DE-A1- 102018 219 027

## Beschreibung

### Stand der Technik

Die DE 10 2017 211 886 A1 offenbart ein Verfahren zur Beeinflussung eines Geschwindigkeitsregelungssystems eines einspurigen Kraftfahrzeugs, bei dem
- nach der Aktivierung des Verfahrens durch den Fahrer die Geschwindigkeit eines zweiten direkt vorausfahrenden Kraftfahrzeugs ermittelt wird,
- vom Kraftfahrzeug die Geschwindigkeit des vorausfahrenden Kraftfahrzeugs übernommen wird und
- wobei bei Unterschreitung einer vorgegebenen Minimalgeschwindigkeit mittels eines haptischen Signals eine Fahrerwarnung über die erfolgte oder bevorstehende Deaktivierung des Geschwindigkeitsregelungssystems erfolgt und das Geschwindigkeitsregelungssystem deaktiviert wird.

Aus der DE 10 2010 027768 A1 ist ein Verfahren zur Darstellung eines Kurvenverlaufs auf einer Anzeigeeinrichtung eines Fahrerinformationssystems bekannt.

### Offenbarung der Erfindung

Die Erfindung betrifft ein Verfahren zur Fahrerinformation bei einem aktivierten Abstands- und/oder Geschwindigkeitsregelungssystem eines einspurigen Kraftfahrzeugs, bei dem
- der zeitliche Verlauf der Gierrate ermittelt wird,
- anhand des zeitlichen Verlaufs der Gierrate ermittelt wird, ob ein eine Mehrzahl von Engkurven aufweisender Straßenabschnitt vorliegt und
- bei Vorliegen eines eine vorgegebene Mehrzahl von Engkurven aufweisenden Straßenabschnitts eine Fahrerwarnung ausgegeben wird.

Eine vorteilhafte Ausgestaltung der Erfindung ist dadurch gekennzeichnet, dass die Fahrerwarnung bei Vorliegen eines innerhalb eines Zeitintervalls vorgegebener Länge oder innerhalb eines Straßenabschnitts vorgegebener Länge eine Mehrzahl von Engkurven aufweisenden Straßenabschnitts ausgegeben wird.

Eine vorteilhafte Ausgestaltung der Erfindung ist dadurch gekennzeichnet, dass eine durchfahrene Passage bzw. durchfahrenes Teilstück des Straßenabschnitts dann als Engkurve erkannt wird, wenn der Wert der während des Durchfahrens der Passage zeitlich integrierten Gierrate innerhalb eines vorgegebenen Wertebereichs liegt.

Eine vorteilhafte Ausgestaltung der Erfindung ist dadurch gekennzeichnet, dass der vorgegebene Wertebereich die Werte zwischen 150 Grad und 210 Grad umfasst.

Eine vorteilhafte Ausgestaltung der Erfindung ist dadurch gekennzeichnet, dass der Rollwinkel des einspurigen Kraftfahrzeugs ermittelt wird und dass die durchfahrene Passage des Straßenabschnitts nur dann als Engkurve erkannt wird, wenn zusätzlich der Rollwinkel während des Durchfahrens der Passage einen vorgegebenen Wert erreicht oder überschreitet.

Eine vorteilhafte Ausgestaltung der Erfindung ist dadurch gekennzeichnet, dass es sich bei der Fahrerwarnung um eine optische und/oder akustische Aufforderung handelt, das Abstands- und/oder Geschwindigkeitsregelungssystem zu deaktivieren.

Eine vorteilhafte Ausgestaltung der Erfindung ist dadurch gekennzeichnet, dass bei Vorliegen des eine vorgegebene Mehrzahl von Engkurven aufweisenden Straßenabschnitts das Abstands- und/oder Geschwindigkeitsregelungssystem fahrerunabhängig deaktiviert wird.

Eine vorteilhafte Ausgestaltung der Erfindung ist dadurch gekennzeichnet, dass als vorgegebene Mehrzahl von Engkurven die Anzahl zwei oder die Anzahl drei gewählt wird.

Eine vorteilhafte Ausgestaltung der Erfindung ist dadurch gekennzeichnet, dass es sich bei dem einspurigen Kraftfahrzeug um ein Motorrad handelt.

Eine vorteilhafte Ausgestaltung der Erfindung ist dadurch gekennzeichnet, dass die Fahrerwarnung zumindest mittels einer optischen Anzeige erfolgt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

Die Zeichnung umfasst die Figuren 1 bis 3.

In Fig. 1 ist in Draufsicht die Folgefahrt eines mit einem Abstands- und/oder Geschwindigkeitsregelungssystem ausgerüsteten Motorrads und einem vorausfahrenden PKW als Zielobjekt beim Befahren einer geradlinigen Straße dargestellt.

In Fig, 2 ist in Draufsicht ein mit einem Abstands- und/oder Geschwindigkeitsregelungssystem gerichteten Motorrad und einem vorausfahrenden PKW beim Durchfahren einer engen Kurve dargestellt.

In Fig. 3 ist in Draufsicht die Folgefahrt mehrerer Motorräder auf einer mehrere Spitzkehren bzw. enge Kurven aufweisenden Passstraße dargestellt.

Bei der Folgefahrt von Motorrädern hinter anderen Verkehrsteilnehmern in kurvigen Straßenabschnitten, z.B. Passstraßen, kann es seitens des Radarsystems zu Verlusten des Zielobjekts kommen und eine Abstands- und/oder Geschwindigkeitsregelung ist nicht mehr möglich. Das Zielobjekt kann plötzlich aus dem Erfassungsbereich der Umfeldsensorik der Abstands- und/oder Geschwindigkeitsregelungsfunktion verschwinden. Dies kann z.B. durch eine enge Kurve oder eine starke Straßenkrümmung bedingt sein.

In solchen Situationen könnte ein Motorrad durch die Abstands- und/oder Geschwindigkeitsregelungsfunktion unter Umständen sogar ungewollt beschleunigen. Um solche Situationen zu verhindern, kann mit Hilfe von Daten der Inertialsensorik und der Zeit eine dynamische Kurvenfahrt, wie sie z.B. auf einer Passstraße vorliegt detektiert werden.

Über die Anzahl der Schwingungen oder kompletten Kehren innerhalb einer bestimmten Zeit lässt sich eine Wahrscheinlichkeit berechnen, dass demnächst noch weitere Kehren auf der Fahrtstrecke liegen. Erreicht diese Wahrscheinlichkeit einen vorgegebenen Grenzwert, dann kann eine Warnung ausgegeben werden, z.B. eine optische Anzeige mit der Empfehlung an den Fahrer, das Abstands- und/oder Geschwindigkeitsregelungssystem abzuschalten und wieder die volle Kontrolle über das Fahrzeug zu übernehmen.

In die Ermittlung der Wahrscheinlichkeit eingehende Größen können z.B.
- die Gierrate des Motorrades,
- die Wankrate bzw. Rollrate des Motorrades,
- den Wankwinkel bzw. Rollwinkel des Motorrades,
- den zeitlichen Abstand der Kehren
umfassen.

Um den Kurvenradius während der Fahrt zu bestimmen, kann die Gierrate während der Fahrt zeitlich aufintegriert werden. Bewegt sich dieser aufintegrierte Wert um die Nullstellung herum, so kann von einer Geradeausfahrt ausgegangen werden. Weicht die Gierrate allerdings längere Zeit von der Nullstellung in eine bestimmte Richtung ab, dann kann von einer Kurvenfahrt ausgegangen werden.

Zum Zeitpunkt der Abweichung beginnt die Berechnung des Kurvenwinkels mit Hilfe der Gierrate. Wird die Kurvendurchfahrt innerhalb einer bestimmten Zeit mit gleichzeitigem Erreichen eines bestimmten Rollwinkels durchgeführt, dann kann von einer Engkurve bzw. von einer Spitzkehre ausgegangen werden. Findet eine erneute Detektion einer Engkurve innerhalb kurzer Zeit in genau die andere Richtung statt, dann kann mit hoher Wahrscheinlichkeit von einer Passstraße ausgegangen werden. Steigt diese Wahrscheinlichkeit und erreicht einen bestimmten Grenzwert, dann wird eine Aufforderung an den Fahrer, das Abstands- und/oder
Geschwindigkeitsregelungssystem abzuschalten, ausgelöst. Der Grenzwert kann parametrierbar sein.

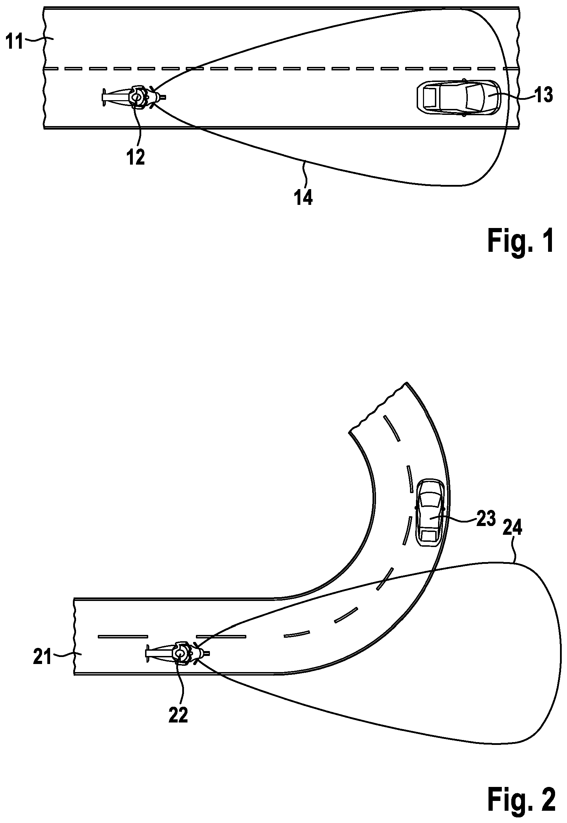

In Fig. 1 ist in Draufsicht die Folgefahrt eines auf einer Straße 11 fahrenden mit einem Abstands- und/oder Geschwindigkeitsregelungssystem ausgerüsteten Motorrads 12 und einem vorausfahrenden PKW 13 als Zielobjekt dargestellt. Der ungefähr keulenförmig eingezeichnete Bereich 14 kennzeichnet den Erfassungsbereich der Radarsensorik des Abstands- und/oder Geschwindigkeitsregelungssystems, mit welchem das Motorrad ausgerüstet ist und welche den vor dem Motorrad befindlichen Bereich überwacht. Dass die Straße 11 geradlinig ist, befindet sich der PKW 13 mitten im Erfassungsbereich 14 der Radarsensorik, so dass der sichere Betrieb des Abstands- und/oder Geschwindigkeitsregelungssystems des Motorrads möglich ist.

In Fig. 2 weist die Straße 21 eine starke Linkskrümmung auf. Das vorausfahrende Fahrzeug 23 befindet sich deshalb nicht mehr im keulenförmigen Erfassungsbereich 24 der Radarsensorik des Motorrads 22. Das Abstands- und/oder Geschwindigkeitsregelungssystem des Motorrads findet deshalb kein Zielobjekt mehr.

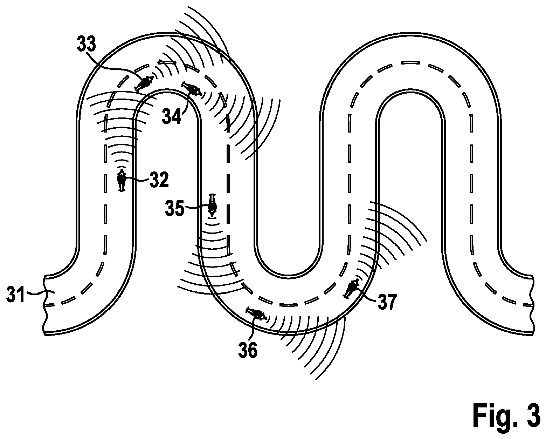

In Fig. 3 sind in Draufsicht die Folgefahrt mehrere Motorräder 32, 33, 34, 35, 36 und 37 auf einer mehrere Spitzkehren bzw. enge Kurven aufweisenden Passstraße 31 dargestellt. Auf einer derartigen Passstraße bzw. Serpentinenstraße verschwindet häufig das vorausfahrende Fahrzeug aus dem Erfassungsbereich der Radarsensoriken der Abstands- und/oder Geschwindigkeitsregelungssysteme, um kurz danach wieder zu erscheinen. Für den Fahrer kann es sicherer sein, in solchen Serpentinenstraßen das Abstands- und/oder Geschwindigkeitsregelungssystem bewusst zu deaktivieren, um bewusst die volle Kontrolle über sein Fahrzeug zu übernehmen. Hierzu eignet sich eine Fahrerwarnung und die Aufforderung, das System abzuschalten, nachdem das Abstands- und/oder Geschwindigkeitsregelungssystem das Vorliegen einer Serpentinenstraße mit hoher Wahrscheinlichkeit detektiert hat. Der Fahrer erkennt, wenn das Durchfahren der Serpentinenstraße abgeschlossen ist und kann dann wieder manuell das Abstands- und/oder Geschwindigkeitsregelungssystem aktivieren.

## Patentansprüche

1. Verfahren zur Fahrerinformation bei einem aktivierten Abstands- und/oder Geschwindigkeitsregelungssystem eines einspurigen Kraftfahrzeugs (12), bei dem
- der zeitliche Verlauf der Gierrate ermittelt wird,
- anhand des zeitlichen Verlaufs der Gierrate ermittelt wird, ob ein eine Mehrzahl von Engkurven aufweisender Straßenabschnitt (31) vorliegt und
- bei Vorliegen eines eine vorgegebene Mehrzahl von Engkurven aufweisenden Straßenabschnitts eine Fahrerwarnung ausgegeben wird.

2. Verfahren nach Anspruch 1, **dadurch gekennzeichnet, dass** die Fahrerwarnung bei Vorliegen eines innerhalb eines Zeitintervalls vorgegebener Länge oder innerhalb eines Straßenabschnitts vorgegebener Länge eine vorgegebene Mehrzahl von Engkurven aufweisenden Straßenabschnitts ausgegeben wird.

3. Verfahren nach Anspruch 1, **dadurch gekennzeichnet, dass** eine durchfahrene Passage des Straßenabschnitts dann als Engkurve erkannt wird, wenn der Wert der während des Durchfahrens der Passage zeitlich integrierten Gierrate innerhalb eines vorgegebenen Wertebereichs liegt.

4. Verfahren nach Anspruch 3, **dadurch gekennzeichnet, dass** der vorgegebene Wertebereich die Werte zwischen 150 Grad und 210 Grad umfasst.

5. Verfahren nach Anspruch 3, **dadurch gekennzeichnet, dass** der Rollwinkel des einspurigen Kraftfahrzeugs ermittelt wird und dass die durchfahrene Passage des Straßenabschnitts nur dann als Engkurve erkannt wird, wenn zusätzlich der Rollwinkel während des Durchfahrens der Passage einen vorgegebenen Wert erreicht oder überschreitet.

6. Verfahren nach Anspruch 1, **dadurch gekennzeichnet, dass** es sich bei der Fahrerwarnung um eine optische und/oder akustische Aufforderung handelt, das Abstands- und/oder Geschwindigkeitsregelungssystem zu deaktivieren.

7. Verfahren nach Anspruch 1, **dadurch gekennzeichnet, dass** bei Vorliegen des eine vorgegebene Mehrzahl von Engkurven aufweisenden Straßenabschnitts das Abstands- und/oder Geschwindigkeitsregelungssystem fahrerunabhängig deaktiviert wird.

8. Verfahren nach Anspruch 1, **dadurch gekennzeichnet, dass** als vorgegebene Mehrzahl von Engkurven die Anzahl zwei oder die Anzahl drei gewählt wird.

9. Verfahren nach Anspruch 1, **dadurch gekennzeichnet, dass** es sich bei dem einspurigen Kraftfahrzeug um ein Motorrad handelt.

10. Verfahren nach Anspruch 1, **dadurch gekennzeichnet, dass** die Fahrerwarnung zumindest mittels einer optischen Anzeige erfolgt.

11. Vorrichtung, enthaltend Mittel, die zur Durchführung eines Verfahrens gemäß einem der Ansprüche 1-10 ausgestaltet sind.

## Claims

1. Method for informing a driver when a distance and/or speed regulating system of a single-track motor vehicle (12) is active, in which
- the time curve of the yaw rate is determined,
- the time curve of the yaw rate is used to determine the presence of a road section (31) which has a plurality of tight corners, and
- a driver warning is output in the presence of a road section which has a specified plurality of tight corners.

2. Method according to Claim 1, **characterized in that** the driver warning is output in the presence of a road section which has a specified plurality of tight corners within a time interval of specified length or within a road section of specified length.

3. Method according to Claim 1, **characterized in that** a passage of the road section that is driven along is identified as a tight corner when the value of the yaw rate integrated with respect to time when the passage is driven through lies within a specified value range.

4. Method according to Claim 3, **characterized in that** the specified value range includes the values between 150 degrees and 210 degrees.

5. Method according to Claim 3, **characterized in that** the roll angle of the single-track motor vehicle is determined, and **in that** the passage of the road section that is driven along is identified as a tight corner only when, in addition, the roll angle reaches or exceeds a specified value when driving along the passage.

6. Method according to Claim 1, **characterized in that** the driver warning is an optical and/or acoustic request to deactivate the distance and/or speed regulating system.

7. Method according to Claim 1, **characterized in that** the distance and/or speed regulating system is deactivated independently of the driver in the presence of the road section having a specified plurality of tight corners.

8. Method according to Claim 1, **characterized in that** the number two or the number three is selected as the specified plurality of tight corners.

9. Method according to Claim 1, **characterized in that** the single-track motor vehicle is a motorcycle.

10. Method according to Claim 1, **characterized in that** the driver warning is issued at least by means of an optical display.

11. Device, containing means that are configured to carry out a method according to any of Claims 1-10.

## Revendications

1. Procédé destiné à informer un conducteur lors de l'activation d'un système de régulation de distance et/ou de vitesse d'un véhicule à voie unique (12), dans lequel
- la courbe temporelle de la vitesse de lacet est déterminée,
- la courbe temporelle de la vitesse de lacet est utilisée pour déterminer si une section de chaussée (31) comportant une pluralité de virages serrés est présente, et
- si une section de chaussée comportant une pluralité spécifiée de virages serrés est présente, un avertissement est délivré au conducteur.

2. Procédé selon la revendication 1, **caractérisé en ce que** l'avertissement au conducteur est délivré en présence d'une section de chaussée comportant une pluralité spécifiée de virages serrés à l'intérieur d'un intervalle de temps de longueur prédéfinie ou à l'intérieur d'une section de chaussée de longueur prédéfinie.

3. Procédé selon la revendication 1, **caractérisé en ce qu'**un passage traversé de la section de chaussée est reconnu comme virage serré lorsque la valeur de la vitesse de lacet intégrée temporellement pendant la traversée du passage se situe à l'intérieur d'une plage de valeurs prédéfinie.

4. Procédé selon la revendication 3, **caractérisé en ce que** la plage de valeurs prédéfinie comprend les valeurs comprises entre 150 degrés et 210 degrés.

5. Procédé selon la revendication 3, **caractérisé en ce que** l'angle de roulis du véhicule à voie unique est déterminé et **en ce que** le passage traversé de la section de chaussée n'est reconnu comme virage serré que si, en outre, l'angle de roulis atteint ou dépasse une valeur prédéfinie pendant la traversée du passage.

6. Procédé selon la revendication 1, **caractérisé en ce que** l'avertissement au conducteur est une invitation optique et/ou acoustique à désactiver le système de régulation de distance et/ou de vitesse.

7. Procédé selon la revendication 1, **caractérisé en ce que**, en présence de la section de chaussée comportant une pluralité spécifiée de virages serrés, le système de régulation de distance et/ou de vitesse est désactivé indépendamment du conducteur.

8. Procédé selon la revendication 1, **caractérisé en ce que** le nombre deux ou le nombre trois est choisi comme pluralité spécifiée de virages serrés.

9. Procédé selon la revendication 1, **caractérisé en ce que** le véhicule à voie unique est une moto.

10. Procédé selon la revendication 1, **caractérisé en ce que** l'avertissement au conducteur est effectué au moins au moyen d'un affichage optique.

11. Dispositif, comportant des moyens qui sont configurés pour mettre en œuvre un procédé selon l'une quelconque des revendications 1 à 10.
